Europäisches Patentamt

(19) European Patent Office

Office européen des brevets

(11) Numéro de publication: **0 283 415**
A1

(12) # DEMANDE DE BREVET EUROPEEN

(21) Numéro de dépôt: **88440010.2**

(22) Date de dépôt: **22.02.88**

(51) Int. Cl.⁴: **B 21 B 37/08**
**G 01 L 25/00**

(30) Priorité: **25.02.87 FR 8702959**

(43) Date de publication de la demande:
**21.09.88 Bulletin 88/38**

(84) Etats contractants désignés:
**AT BE CH DE ES GB IT LI LU NL SE**

(71) Demandeur: **INSTITUT DE RECHERCHES DE LA SIDERURGIE FRANCAISE (IRSID)**
**Voie Romaine B.P. 64**
**F-57210 Maizières-les-Metz (FR)**

(72) Inventeur: **Petit, Pierre**
**6 Chemin des Pavillons**
**F-57210 Maizieres-Lès-Metz (FR)**

**Loubet, Jacques**
**87bis, rue Georges Ducrocq**
**F-57070 Metz (FR)**

**Ratte, Patrice**
**2B Parc du Calvaire**
**F-44650 Indre (FR)**

**Machet, Michel**
**12, rue Pierre Maurice Masson**
**F-57000 Metz (FR)**

(74) Mandataire: **Ventavoli, Roger**
**IRSID B.P. 64 Voie Romaine**
**F-57210 Maizières-lès-Metz (FR)**

(54) **Procédé et dispositif pour la mesure de l'effort de serrage entre les cylindres d'une cage de laminage.**

(57) Ce procédé de mesure des efforts entre les cylindres de travail d'une cage de laminoir est caractérisé en ce que on place entre les cylindres de travail 13, 14 plusieurs pesons 51, 52, 53 allongés, alignès dans un plan passant par les axes desdits cylindres et répartis symétriquement par rapport au plan médian de la cage 1, on exerce un effort de serrage sur les pesons au moyen des systèmes de réglage 27, 28, on relève la valeur des efforts exercés simultanément sur chaque peson et on en déduit les valeurs des efforts de serrage résultants. On utilise de préférence un dispositif comportant deux demi-coquilles en matériau malléable tel que du cuivre maintenant les pesons en alignement et servant de plaque d'appui écrouissable.

Le procédé s'applique à l'étalonnage des jauges de cage de laminoir à produits plats et à la détermination précise des courbes de cédage.

Fig. 2

EP 0 283 415 A1

**Description**

## PROCEDE ET DISPOSITIF POUR LA MESURE DE L'EFFORT DE SERRAGE ENTRE LES CYLINDRES D'UNE CAGE DE LAMINAGE

La présente invention concerne un procédé et un dispositif pour mesurer l'effort de serrage entre les cylindres des cages de laminoir.

On sait que la connaissance de la force de laminage (ou effort de laminage) est pratiquement indispensable à toute opération de laminage pour fixer les différents paramètres de fonctionnement de chaque cage, optimiser le fonctionnement global du laminoir et assurer la qualité du produit laminé. Ceci est d'autant plus important en cas d'automatisation du processus de laminage, l'effort de laminage sur une cage pouvant alors intervenir comme paramètre de réglage, non seulement de la cage concernée, mais aussi des autres cages du train de laminoir.

Il est également nécessaire, pour obtenir la section et l'épaisseur de produit désirées, de connaître le cédage des cages, c'est-à-dire la variation de la distance entre les cylindres de travail en fonction de l'effort de laminage, les réglages de la cage (position des vis ou vérins de positionnement des empoises) étant par ailleurs inchangés.

Généralement, la mesure de la force de laminage est effectuée au moyen de jauges de mesure d'efforts placées entre les empoises des cylindres de support et les montants des cages ou les systèmes à vis (ou à vérins) de réglage de l'écartement des cylindres de travail.

Ces jauges mesurent donc en fait l'effort de serrage transmis par ces systèmes de réglage aux empoises des cylindres de support et non l'effort réel de laminage qui est celui s'exerçant au niveau de la génératrice des cylindres de travail. La différence entre la force de laminage réelle et la force mesurée par les jauges résulte des frottements ou coincements pouvant apparaître entre empoises et cage et aussi d'une répartition non uniforme de l'effort de laminage sur la longueur des cylindres se traduisant par un déséquilibre entre les jauges situées des deux côtés de la cage.

Les mêmes facteurs, auxquels s'ajoutent la flexion des cylindres, l'écrasement au niveau des génératrices de contact et les divers jeux existant aux niveaux des paliers, interviennent aussi dans la détermination du cédage.

De plus, on a constaté que les jauges installées à demeure sur les cages peuvent subir une dérive dans le temps suite aux contraintes variables et importantes auxquelles elles sont soumises pendant le laminage.

Il est donc nécessaire de réétalonner périodiquement ces jauges. Or, le procédé d'étalonnage existant consiste à déposer ces jauges et à les faire contrôler en laboratoire sur un banc de mesure approprié. Cette façon de faire présente deux inconvénients principaux. D'une part, la durée d'intervention sur les cages pour le démontage-remontage, qui s'ajoute au temps nécessaire au contrôle lui-même est importante et peut conduire à un arrêt du laminoir. D'autre part, l'étalonnage étant fait hors de l'emplacement normal des jauges, ne permet pas de prendre en compte les caractéristiques particulières de chaque cage ni de refléter la force réelle de laminage avec exactitude.

On connait des procédés et dispositifs permettant de mesurer les efforts s'exerçant entre les cylindres de travail de cages de laminoirs. Le document US 4 131 004 décrit notamment un procédé de ce type, utilisant un dispositif comportant plusieurs capteurs de charge maintenus alignés dans un cadre, et que l'on insère entre les cylindres. Ce procédé est essentiellement destiné à prédéterminer les réglages de la cage pour obtenir une répartition uniforme de la charge sur la longueur des cylindres.

Un but de la présente invention est de permettre l'étalonnage in situ des jauges des cages de laminoir dans les conditions se rapprochant le plus possible des conditions de fonctionnement réelles, et plus particulièrement dans le cas de laminoirs pour produits plats, de faible épaisseur.

Un autre but est d'améliorer la précision de la mesure tout en la facilitant par l'utilisation de moyens de mesure aisément manipulables.

Un autre but est de réaliser cet étalonnage dans un temps le plus court possible.

Un autre but encore est d'accéder à une meilleure connaissance de la courbe de cédage, c'est-à-dire du cédage en fonction de l'effort de laminage réel.

En vue d'atteindre ces buts, l'invention a notamment pour objet un dispositif pour la mesure des efforts de serrage entre les cylindres d'une cage de laminoir, comprenant plusieurs capteurs de charge maintenus alignés, ce dispositif étant caractérisé en ce que lesdits capteurs sont des pesons plats allongés et de même épaisseur et qu'ils sont disposés entre deux plaques d'appui comportant des moyens de maintien en alignement des pesons, lesdites plaques d'appui étant réalisées en un matériau malléable capable de s'écrouir sous l'action des efforts de compression auxquels les plaques sont soumises lorsque le dispositif est serré entre lesdits cylindres.

Ce dispositif est particulièrement avantageux car il maintient les pesons alignés et facilite grandement leur positionnement entre les cylindres de travail et le maintien de leur position relative au cours des différentes manipulations et mesures. De plus, la présence d'un matériau malléable entre respectivement les faces supérieures et inférieures des pesons et les cylindres assure, par déformation dudit matériau, une transmission de l'effort sur toute la surface des pesons, en évitant les surcharges locales qui se produiraient inévitablement en cas de contact direct pesons-cylindres du fait des irrégularités ou défauts, même très faibles, des surfaces dures en contact. Or, comme cela sera précisé par la suite, un contact ponctuel, ou sur une surface très réduite, agirait comme un poinçonnement et rendrait toute mesure impossible ou au moins inexacte.

De plus, la présence dudit matériau malléable permet de compenser des éventuelles différences d'épaisseur des pesons, qui, aussi minimes soient-elles, risquent de fausser les mesures. On remarquera que dans le cas d'un dispositif du type décrit dans le document US 4 13 1004 précité, une minime différence d'épaisseur des capteurs de charge est susceptible d'invalider les réglages réalisés au moyen de ce dispositif, sous peine d'obtenir à terme des produits laminés d'épaisseur variable transversalement.

Un autre objet de l'invention est un procédé de mesure des efforts de serrage entre les cylindres d'une cage de laminoir pourvue de moyens de réglage de l'écartement des cylindres de travail, procédé mettant en oeuvre le dispositif selon l'invention et caractérisé en ce que :

- on place ledit dispositif entre des cylindres de mesure présentant une génératrice rectiligne et disposés à l'emplacement des cylindres de travail, de manière que les pesons soient alignés dans un plan passant par les axes des cylindres de mesure, et répartis, symétriquement par rapport au plan médian de ladite cage perpendiculaire aux axes des cylindres, sur au moins une partie de la longueur des génératrices desdits cylindres ;

- on rapproche lesdits cylindres de mesure à l'aide des moyens de réglage pour exercer un effort de serrage sur les pesons ;

- on ajuste lesdits moyens de réglage pour exercer un effort de serrage sur les pesons ;

- on ajuste lesdits moyens de réglage pour que les efforts subis par les pesons d'extrémité de l'ensemble des pesons soient sensiblement égaux ;

- on relève la valeur des efforts exercés simultanément sur chaque peson pour en déduire la valeur de l'effort de serrage résultant.

Selon une disposition particulière de l'invention, on applique le procédé à une cage de laminoir pourvue de jauges de mesure de la force de laminage logées au niveau des moyens de réglage des cylindres de travail, et on étalonne lesdites jauges à l'aide des valeurs relevées des efforts exercés sur les pesons.

Avantageusement, on effectue plusieurs mesures de l'effort subi par les pesons en faisant varier l'effort de serrage, ce qui permet d'établir la courbe d'étalonnage donnant la valeur de l'effort réel mesuré par les pesons en fonction de la valeur indiquée par les jauges de la cage.

Selon une autre disposition particulière, on applique le procédé à la détermination de la courbe de cédage par le fait que, pour chaque mesure de l'effort entre cylindre, on relève aussi la position des moyens de réglage, et on en déduit la valeur du cédage en fonction de l'effort mesuré.

Un avantage du procédé selon l'invention réside dans le fait qu'il permet d'étalonner "in situ" les jauges de la cage, donc rapidement sans démontage-remontage et sans risque d'immobilisation du train de laminoir.

Un autre avantage est que cet étalonnage est effectué dans des conditions proches de celles du laminage, l'ensemble des pesons répartis sur la génératrice des cylindres agissant, dans le cas de cage de laminoir pour produits plats, comme une tôle fictive du fait de la répartition de l'effort sur une longueur correspondant à la largeur d'une tôle laminée.

On peut d'ailleurs, grâce à ce procédé, établir facilement les courbes de cédage correspondant à différentes largeurs de produits plats ou tôles laminés. A cet effet, on effectue plusieurs séries de mesures en disposant pour chaque série un nombre de pesons tel que la longueur de la portion de génératrice qu'ils couvrent soit égale à une largeur de produit déterminée (les pesons n'étant toutefois pas nécessairement parfaitement jointifs).

On peut également, grâce à ce procédé, en comparant les valeurs données par les différents pesons, observer d'éventuels déséquilibres entre les deux côtés de la cage, susceptibles de se produire lors des variations de charge ; ces déséquilibres signalant des anomalies dans le fonctionnement des systèmes de guidage ou de réglage de la cage, les mesures effectuées par le procédé de l'invention permettent alors de signaler d'éventuelles défectuosités de la cage.

D'autres caractéristiques et avantages apparaîtront à la lecture de la description qui va être faite d'un mode de réalisation du dispositif selon l'invention et de son utilisation pour l'étalonnage des jauges de mesure d'efforts placées à demeure sur une cage de laminage de produits plats.

On se reportera aux dessins annexés dans lesquels :

- la figure 1 est une représentation schématique de face d'une cage de laminoir avec les pesons et appareillage d'étalonnage ;

- la figure 2 est une vue schématique en perspective d'un dispositif conforme à l'invention placé entre des cylindres de mesure ;

- la figure 3 est une section d'un autre mode de réalisation du dispositif montrant sa disposition entre deux cylindres de travail.

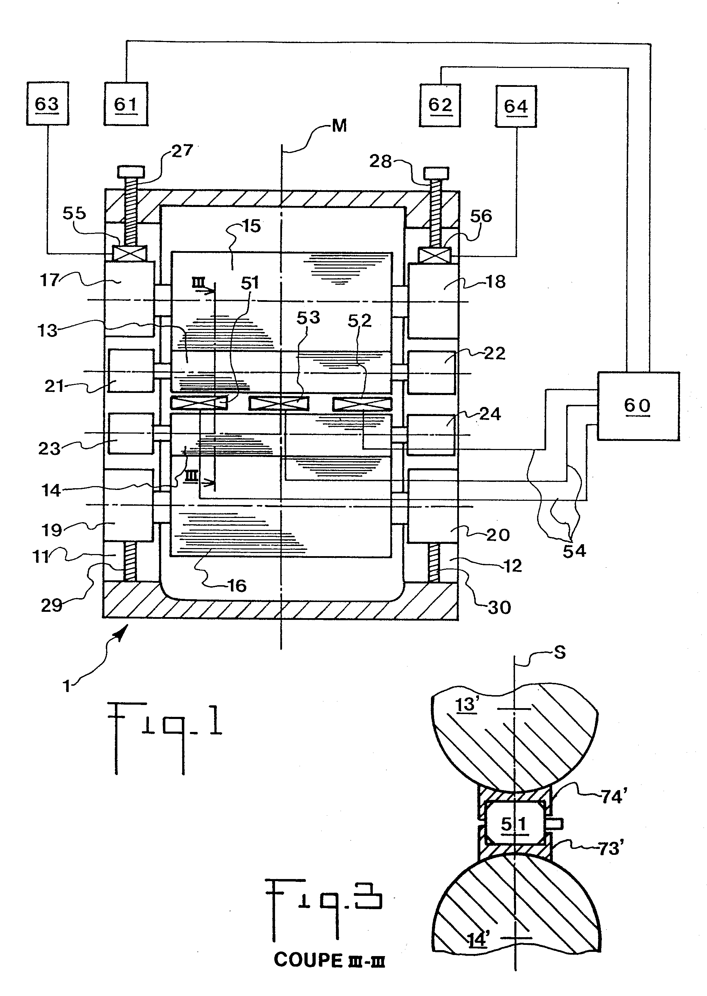

La cage de laminoir représentée à la figure 1 comporte deux montants 11, 12 entre lesquels sont disposés à la place des deux cylindres de travail, des cylindres de mesure 13, 14 et, de manière habituelle, respectivement au-dessus et au-dessous de ces derniers, deux cylindres de soutien 15, 16. Les cylindres de mesure sont des cylindres de caractéristiques dimensionnelles semblables à celles des cylindres de travail habituellement utilisés sur cette cage. On pourra utiliser des cylindres rebutés, réusinés et mis en place spécialement pour effectuer l'étalonnage. On pourra également, sous certaines conditions qui seront précisées ci-après, conserver les cylindres de travail, ce qui évite les opérations de dépose et repose de ceux-ci.

Les cylindres de mesure (ou de travail) 13, 14 sont maintenus par leurs extrémités dans des empoises 21, 22, 23, 24 susceptibles de coulisser verticalement dans les montants 11, 12.

De même, les cylindres de soutien 15, 16 sont maintenus par les empoises 17, 18, 19, 20, également coulissantes sur lesquelles s'appuient les systèmes de réglage de l'emprise entre cylindres de travail. Ces systèmes de réglage de l'écartement relatif des cylindres de travail sont représentés symboliquement sur la figure 1 par des systèmes à vis 27, 28, 29, 30. Toutefois, ces systèmes sont actuellement couramment des systèmes à vérins hydrauliques.

Entre les vis de réglage supérieures 27, 28 et les empoises 17, 18, sont placées les jauges 55, 56 de mesure d'efforts de la cage. Ces jauges sont reliées à des indicateurs d'efforts 63, 64 qui indiquent les efforts enregistrés par chaque jauge ou bien en font la somme et la différence dans le but d'avoir l'effort total résultant et une indication du déséquilibre entre les deux côtés de la cage.

On va maintenant décrire le procédé général selon l'invention d'étalonnage de ces ensembles jauges-indicateurs 55, 56, 63, 64. Pour cela, on dispose trois pesons plats allongés 51, 52, 53 dans l'emprise des cylindres, alignés parallèlement aux axes de ceux-ci, un à chaque extrémité et le troisième au milieu. Dans l'exemple choisi, chaque peson peut supporter un effort de 5000 KN et l'utilisation de trois pesons est nécessaire pour effectuer les différentes mesures sans risquer la surcharge d'un peson.

Chaque peson est relié par un câble de liaison 54 à un calculateur qui comporte les ponts d'extensométrie relatifs à chaque peson, et qui permet d'effectuer les différents calculs nécessaires à l'obtention de l'indication des efforts s'exerçant des deux côtés de la cage sur les afficheurs 61, 62, pour les comparer avec les valeurs relevées sur les indicateurs 63, 64.

Les pesons étant en place, on rapproche les cylindres 13, 14 jusqu'à exercer un effort de serrage sur les pesons. Grâce aux moyens de réglage 27, 28, on équilibre le plus précisément possible les efforts de serrage, en essayant d'obtenir des valeurs identiques sur les afficheurs 61, 62. Il est précisé que ces valeurs ne correspondent pas nécessairement aux charges supportées par les pesons d'extrémités 51, 52 ; elles sont en fait obtenues par le calculateur 60 à partir des signaux fournis par chaque peson, et qui peuvent être traités de différentes manières. Une méthode particulière consiste par exemple à sommer le signal fourni par un peson d'extrémité avec la moitié du signal fourni par le peson du milieu. D'autres méthodes de calcul de la valeur affichée peuvent être utilisées, en particulier pour tenir compte des caractéristiques de la cage (bombé des cylindres, dispositifs de réglage du cambrage ou de l'équilibrage) ou d'un nombre de pesons différent de trois.

L'équilibrage des charges entre les deux côtés de la cage étant réalisé, on relève la valeur lue sur chaque indicateur 63, 64 et la valeur lue sur l'afficheur 61, 62 correspondant au même côté.

En ajustant simultanément les systèmes de réglage 27, 28, on fait varier l'effort global, et, pour chaque position de réglage, on relève les valeurs données par les indicateurs et par les afficheurs. On peut alors établir pour chacune des jauges d'effort 55, 56 de la cage, une courbe d'étalonnage. Si la cage fait partie d'un train de laminage automatisé, les courbes d'étalonnage peuvent être mémorisées dans le système d'automatisation et être utilisées, en service, comme correction automatique des indications données par les jauges 55, 56 montées à demeure sur ladite cage.

Parallèlement aux mesures d'étalonnage et dans le but de mieux contrôler l'épaisseur du produit laminé, on peut établir avantageusement les courbes de cédage de la cage en relevant la position des organes de réglage, en fonction de l'effort mesuré entre cylindres, ce qui, du fait de l'invariabilité de la distance entre cylindres pendant la mesure, correspond à la variation, en service, de cette distance en fonction de l'effort de laminage.

On pourra aussi effectuer d'autres séries de mesures destinées à approfondir la connaissance des caractéristiques de la cage considérée. En particulier, on pourra rapprocher les pesons d'extrémité l'un de l'autre, ce qui permettra d'étudier le comportement sous charge de la cage pour différentes largeurs de produit. En effet, l'ensemble des pesons allongés utilisés peut être assimilé à une tôle de largeur égale à la distance entre les faces les plus éloignées des deux pesons d'extrémité 51, 52. Un des impératifs, pour respecter cette similitude, étant de conserver une bonne répartition des pesons sur la "largeur" de tôle considérée, on pourra bien sûr adapter le nombre de pesons utilisés pour remplir au mieux cette condition.

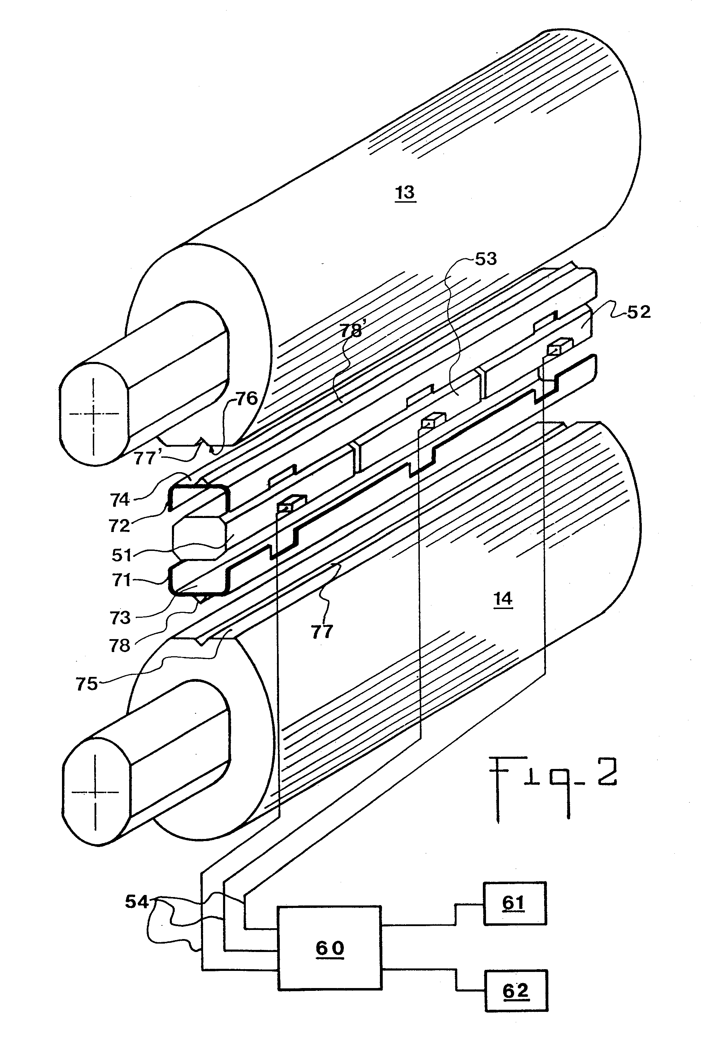

Il est intéressant de noter ici, avant de décrire le dispositif représenté à la figure 2, que deux problèmes apparaissent pour la mise en oeuvre du procédé décrit ci-dessus.

En effet, afin de conserver la caractéristique souhaitée pour la mesure consistant à se rapprocher le plus près possible des conditions réelles de fonctionnement de la cage (assimilation de l'ensemble des pesons à une "tôle fictive"), il faut utiliser des pesons de faible épaisseur, cette épaisseur étant d'ailleurs limitée par l'écartement possible également faible des cylindres de travail des cages de laminoir pour produits plats. Les efforts mis en jeu étant très importants, il est nécessaire que la surface des pesons soit suffisante pour supporter la pression exercée par les cylindres.

On se trouve alors confronté à la nécessité d'avoir, d'une part, des pesons capables de supporter des charges importantes et ayant donc une grande surface d'appui (ce qui conduit couramment à des pesons ayant aussi une relativement grande hauteur) et, d'autre part, d'utiliser des pesons dont la hauteur est, au contraire, faible pour permettre leur mise en place entre les cylindres.

On comprendra aisément que l'état de surface des pesons et des cylindres ne pouvant être parfaitement plan et lisse, et que le parallélisme des faces en contact ne pouvant non plus être parfait, on risque fortement d'obtenir des pointes de pression à la surface desdits pesons.

Outre une détérioration de ces surfaces, on s'expose à d'importantes erreurs de mesure. En effet, les pesons plats sont typiquement constitués d'un corps d'épreuve en métal à haute résistance, allongé, de section rectangulaire. Sur celui-ci sont collés, de manière classique, plusieurs ensembles de jauges de contrainte réparties sur deux faces latérales opposées du corps d'épreuve de façon à délivrer un signal dépendant directement de l'effort s'exerçant perpendiculairement aux deux autres grandes faces latérales du corps d'épreuve. Etant donné l'importance des forces de compression mises en jeu (plus de 10000 KN entre cylindres dans l'exemple considéré), il est nécessaire, pour que le peson soit fiable, que le corps d'épreuve ait une section longitudinale, et donc une longueur, suffisante pour que les contraintes créées par ces efforts importants restent suffisamment en dessous de la limite élastique du matériau du corps d'épreuve. Il faut donc également placer un nombre suffisant de jauges sur le corps d'épreuve et du fait de la faible épaisseur du peson, et donc du corps d'épreuve, les jauges se trouvent relativement proches des faces supérieures et inférieures du peson qui sont soumises à l'effort de compression.

De ce fait, un effort "ponctuel" sur une de ces surfaces n'influence que la jauge (ou les quelques jauges) située directement à proximité de ce point (dans la zone du "cône d'action" de l'effort) à l'exclusion des autres jauges plus nombreuses et éloignées de ce point. Il en résulte que, ces dernières jauges ne délivrant aucun signal, le signal résultant est faussé. De plus, la charge importante agissant sur une seule jauge peut amener celle-ci à saturation, faussant la mesure et risquant même de la détruire.

C'est pour éviter ces inconvénients qu'a été réalisé le dispositif selon l'invention, représenté figure 2, qui remplit essentiellement deux fonctions qui sont, d'une part, protection des surfaces des pesons et répartition des efforts sur celles-ci, et d'autre part, maintien en position des pesons entre eux et par rapport aux cylindres.

Le dispositif est constitué de deux demi-coquilles 71, 72 en cuivre, de section en U, se faisant face, placées de part et d'autre des pesons 51, 52, 53, de façon que les fonds des U formant plaques d'appui planes 73, 74, soient en regard des faces d'appui des pesons. Les ailes des coquilles recouvrent latéralement les pesons et leur écartement étant égal à la largeur desdits pesons, maintiennent ceux-ci en alignement. Dans ces ailes sont prévues des échancrures permettant le passage des raccords de sortie et des câbles 54 reliant les pesons aux ponts d'extens-ométrie et au calculateur 60.

Selon la figure 2, les cylindres de mesure 13, 14 sont pourvus d'un méplat 75, 76. Ces méplats sont usinés dans des cylindres usagés qui, lors des opérations de mesure et d'étalonnage, sont maintenus fixes en rotation, les méplats 75 et 76 étant parallèles et se faisant face. Une rainure 77, 77' est usinée au milieu du méplat, parallèlement à l'axe des cylindres. Chaque coquille comporte extérieurement une nervure correspondante 78, 78' axée sur la face d'appui 73, 74, destinée à faciliter la mise en place du dispositif entre les cylindres dans le plan passant par l'axe de ceux-ci. Lors des manipulations, le système nervure-rainure permet de maintenir le dispositif en position sans risque de glissement sur les méplats, en dehors dudit plan.

Les coquilles peuvent également ne pas comporter de nervure, mais seulement un repère de centrage à chaque extrémité, servant lors du positionnement initial. Une légère nervure se formera automatiquement lors de la première mise en charge du dispositif, par déformation et écrouissage du cuivre.

Le dispositif est avantageusement utilisé pour des mesures d'effort sur des cages munies de systèmes d'échange rapide des cylindres. Typiquement dans ce cas, on prépare le jeu de cylindres de mesure et le dispositif positionné et aligné entre eux, avant de mettre l'ensemble en position dans la cage, à la place des cylindres de travail. Lorsque l'ensemble est en place, on exerce, grâce aux moyens de serrage, un effort important au moins égal à l'effort maximum qui sera appliqué pendant les mesures. Cette précharge a pour but d'écrouir le cuivre, de rattraper les divers jeux de la cage et de prééquilibrer celle-ci. Ensuite, on relâche cet effort jusqu'à la valeur minimale souhaitée pour les mesures. On veillera cependant à ce que la valeur de l'effort ne descende pas trop bas, pour éviter une décharge localisée du dispositif et un éventuel déplacement de celui-ci par rapport aux cylindres, ou des pesons par rapport aux coquilles, alors que les empreintes des surfaces dures sont déjà marquées dans le cuivre.

Bien entendu, la préparation des cylindres de mesures (usinage des méplats et des rainures) a lieu préalablement à la mise en place du dispositif seulement lors de la première utilisation. Par la suite, les cylindres de mesure peuvent être réutilisés. Par contre, il est préférable de changer les coquilles à chaque étalonnage, ou plus précisément à chaque fois que le dispositif aura été déchargé totalement ou déposé, ceci afin d'éviter des impressions superposées d'empreintes dans le cuivre qui subit à chaque charge importante un écrouissage supplémentaire.

Bien entendu, l'invention n'est pas limitée aux dispositifs et aux procédés précédemment décrits.

En particulier, des coquilles de section en U peuvent être remplacées par deux plaques d'appui planes comportant une nervure de positionnement des pesons, ceux-ci comportant sur chaque face d'appui une rainure correspondante. De même, les coquilles en U peuvent n'être constituées en cuivre que pour les plaques d'appui, les ailes en U étant alors en un autre matériau rigide.

On peut aussi envisager de remplacer les rainures et nervures de positionnement par un simple tracé, ce qui évite des opérations d'usinage sur les cylindres, le positionnement étant alors réalisé visuellement par la mise en concordance des tracés repères des coquilles et cylindres.

Une autre réalisation du dispositif est représentée à la figure 3. Les demi-coquilles 73', 74' ont alors une section en U dont la surface du fond qui vient au contact des cylindres est concave et présente un rayon de courbure égal au rayon des cylindres de travail 13', 14'. Cette disposition complique la réalisation des coquilles et en augmente le coût. Par contre, elle permet de réaliser un étalonnage sans opération de pose et dépose de cylindres, en plaçant le dispositif directement entre les cylindres de travail.

L'utilisation du dispositif n'est pas limitée à l'étalonnage "in situ" des jauges montées sur les cages de laminoir. Ainsi que déjà indiqué, il est adapté à la détermination des courbes de cédage et permet aussi de mieux connaître les effets des réglages de cambrage et d'équilibrage.

De même, l'invention est applicable quelque soit le type de produits devant être laminés, produits plats ou longs dans la mesure où la cage considérée permet, si on le désire, de substituer des cylindres de mesure à génératrice rectiligne aux cylindres de travail.

On notera que, moyennant éventuellement de simples découpes dans les côtés des coquilles pour permettre le passage des câbles de raccordement des pesons, on pourra utiliser avec le même type de coquilles des pesons de longueurs différentes, pour en utiliser par exemple un plus grand nombre, ou on pourra aussi les répartir de manière adaptée à des utilisations particulières.

On notera aussi, quant aux pesons, que, tout en étant placées sur un même corps d'épreuve, les jauges peuvent être toutes regroupées dans un même pont de mesure, ou former plusieurs ponts de mesure. Dans ce dernier cas, chaque peson possèdera plusieurs sorties et nécessitera un appareillage de traitement du signal plus important. En revanche, il sera alors possible d'apprécier des différences de charge entre des zones voisines du même peson.

## Revendications

1) Dispositif pour la mesure des efforts de serrage entre les cylindres (13,14) d'une cage de laminoir (1), comprenant plusieurs capteurs de charge maintenus alignés, caractérisé en ce que lesdits capteurs de charge sont des pesons (51, 52, 53) allongés et de même épaisseur et qu'ils sont disposés entre deux plaques d'appui (73, 74, 73', 74') comportant des moyens de maintien en alignement des pesons, lesdites plaques d'appui étant réalisées en un matériau malléable capable de s'écrouir sous l'action des efforts de compression auxquels les plaques sont soumises lorsque le dispositif est serré entre lesdits cylindres.

2) Dispositif selon la revendication 1, caractérisé en ce que les plaques d'appui (73, 74, 73', 74') sont en cuivre.

3) Dispositif selon la revendication 1, caractérisé en ce que chaque peson allongé est constitué d'un corps d'épreuve (51) en métal haute résistance, de section rectangulaire, et de plusieurs ensembles de jauges de contraintes réparties et collées sur deux faces latérales opposées du corps d'épreuve de façon à délivrer un signal corrélé à l'effort s'exerçant perpendiculairement aux deux autres faces latérales du corps d'épreuve.

4) Dispositif selon la revendication 1, caractérisé en ce que les plaques d'appui (73, 74) sont planes.

5) Dispositif selon la revendication 1, caractérisé en ce que la face des plaques d'appui (73', 74') destinée à être en contact avec les cylindres de mesure (13', 14') est concave de manière à épouser l'arrondi desdits cylindres.

6) Dispositif selon l'une des revendications 4 et 5, caractérisé en ce que la face des plaques d'appui destinée à venir au contact des cylindres de mesure présente au moins une nervure destinée à coopérer avec une rainure correspondante prévue sur les cylindres parallèlement à leur axe pour assurer le centrage et son maintien en position entre lesdits cylindres.

7) Procédé de mesure des efforts de serrage entre les cylindres (13,14) d'une cage de laminoir pourvue de moyens (27,28) de réglage de l'écartement des cylindres de travail, mettant en oeuvre le dispositif selon la revendication 1, caractérisé en ce que :

- on place ledit dispositif entre des cylindres de mesure (13, 14 ou 13', 14') présentant une génératrice rectiligne et disposés à l'emplacement des cylindres de travail, de manière que les pesons soient alignés dans un plan (S) passant par les axes des cylindres de mesure et répartis, symétriquement par rapport au plan médian (M) de ladite cage, perpendiculaire aux axes des cylindres, sur au moins une partie de la longueur des génératrices desdits cylindres ;

- on rapproche lesdits cylindres de mesure l'aide des moyens de réglage (27, 28) pour exercer un effort de serrage sur les pesons (51, 52, 53) ;

- on ajuste lesdits moyens de réglage pour que les efforts subis par les pesons d'extrémité (51, 52) de l'ensemble des pesons soient sensiblement égaux ;

- on relève la valeur des efforts exercés simultanément sur chaque peson pour un déduire la valeur de l'effort de serrage résultant.

8) Procédé selon la revendication 7, caractérisé en ce que, préalablement aux mesures, on place ledit dispositif entre les cylindres de mesure et on aligne celui-ci avec la direction des axes desdits cylindres, ceux-ci étant prémontés en dehors de la cage, puis on introduit l'ensemble constitué par les cylindres et le dispositif dans leur position de travail dans la cage, on exerce un effort de serrage au moins égal à l'effort maximum qui sera appliqué pendant les mesures, puis on relâche cet effort sans toutefois l'annuler.

9) Procédé selon l'une des revendications 7 et 8, caractérisé en ce que, conjointement à la mesure de l'effort de serrage, on mesure aussi le cédage de la cage et on détermine ainsi le cédage correspondant audit effort de serrage.

10) Procédé selon la revendication 9, caractérisé en ce qu'on effectue plusieurs séries de mesures en disposant pour chaque série un nombre de pesons tel que la longueur de la portion de génératrice qu'ils couvrent soit égale à une valeur prédéterminée et on détermine les courbes de cédage correspondant à des produits laminés de largeur égale à ladite longueur.

11) Procédé selon la revendication 7 appliqué au laminage de produits plats, caractérisé en ce que l'on utilise les cylindres de travail (13', 14') comme cylindres de mesure.

12) Procédé selon la revendication 7, caractérisé en ce que l'on remplace les cylindres de travail par des cylindres de mesure (13, 14) comportant un méplat (75, 76) et en ce que l'on immobilise en rotation lesdits cylindres de manière que les méplats se font face.

0283415

Fig.1

Fig.3
COUPE III-III

0283415

Fig. 2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| D,A | US-A-4 131 004  (BLAW-KNOX)<br>* Figures 8,9 *<br>--- | 1,7 | B 21 B   37/08<br>G 01 L   25/00 |
| A | US-A-4 186 579  (BLAW-KNOX)<br>* Figures 1,8,9 *<br>--- | 1,7 | |
| A | FR-A-1 442 711  (DOMINION FOUNDRIES)<br>* Figures 1-3, revendication 17 *<br>--- | 1,7 | |
| A | CH-A-  554 534  (ALICH)<br>--- | 1 | |
| A | DE-A-3 005 967  (KLOCKNER)<br>--- | 1 | |
| A | PATENT ABSTRACTS OF JAPAN, vol. 4, no. 164 (M-41)[646], 14 novembre 1980, page 103 M 41; & JP-A-55 114 414 (KAWASAKI SEITETSU K.K.) 03-09-1980<br>--- | 1 | |
| A | US-A-4 426 874  (MOORE)<br>----- | | |

DOMAINES TECHNIQUES RECHERCHES (Int. Cl.4)

B 21 B   37/00
G 01 L   25/00

Le présent rapport a été établi pour toutes les revendications

| Lieu de la recherche | Date d'achèvement de la recherche | Examinateur |
|---|---|---|
| LA HAYE | 06-06-1988 | VERMEESCH,P.J.C.C. |

EPO FORM 1503 03.82 (P0402)